Europäisches Patentamt

European Patent Office

Office européen des brevets

(11) Numéro de publication: **0 299 851**
**B1**

(12) **FASCICULE DE BREVET EUROPEEN**

(45) Date de publication du fascicule du brevet:
24.10.90

(51) Int. Cl.⁵: **B62D 13/00**

(21) Numéro de dépôt: **88401763.3**

(22) Date de dépôt: **06.07.88**

(54) Dispositif de commande d'un essieu directeur de véhicule tracté.

(30) Priorité: **10.07.87 FR 8710172**

(43) Date de publication de la demande:
**18.01.89 Bulletin 89/3**

(45) Mention de la délivrance du brevet:
**24.10.90 Bulletin 90/43**

(84) Etats contractants désignés:
**BE DE ES GB IT NL**

(56) Documents cités:
**EP-A- 0 079 088**
**CH-A- 481 784**
**DE-A- 1 630 167**
**FR-A- 1 363 252**
**FR-A- 1 455 915**
**FR-A- 2 492 331**
**US-A- 3 212 793**

(73) Titulaire: **FRUEHAUF FRANCE S.A., 2 avenue de l'Aunette, F-91130 Ris Orangis(FR)**
Titulaire: **TRAILOR S.A., 5, Route Nationale 10, F-78310 Coignières(FR)**

(72) Inventeur: **Boudot, Christian, Saint Georges-sur-Baulche, F-89000 Auxerre(FR)**

(74) Mandataire: **Boivin, Claude, 9, rue Edouard-Charton, F-78000 Versailles(FR)**

ACTORUM AG

## Description

Un ensemble routier articulé (aussi bien un tracteur et une semi-remorque qu'un camion et une remorque) doit pouvoir s'inscrire lors d'un virage dans un anneau dont les rayons intérieur et extérieur sont précisés par la réglementation relative à la circulation routière.

La longueur de l'ensemble routier et la position des essieux peut nécessiter que l'un des essieux du train roulant arrière soit orientable, afin de respecter les conditions d'inscription en courbe. Il est connu d'utiliser à cet effet un essieu auto-orientable dont l'axe d'articulation des fusées est déporté par rapport à l'axe de l'essieu, mais ce dispositif ne permet pas d'encaisser les efforts transversaux dûs notamment à la force centrifuge et peut donc conduire à une diminution de la stabilité transversale.

Une autre solution connue consiste à utiliser des essieux orientables guidés :
- soit de façon mécanique mais, dans ce cas, les organes de transmission sont lourds et donnent lieu à un entretien fréquent,
- soit de façon hydraulique en assurant le transfert du liquide contenu dans les vérins situés au niveau du pivot d'attelage vers des vérins assurant l'orientation des fusées de l'essieu. Mais, dans ce cas, l'encombrement des vérins situés autour du pivot d'attelage conduit à une augmentation de la hauteur de la structure, d'où réduction de la hauteur utile.

Le brevet d'invention français FR-A 1 363 252 le véhicule tracté comporte au moins un essieu directeur orientable, des moyens pour assurer l'orientation des fusées de l'essieu jusqu'à présent et un capteur pour détecter le désalignement des véhicules tracteur et tracté, au niveau du point d'attelage, et des moyens pour commander les moyens d'orientation en fonction des indications fournies par le capteur.

La présente invention a pour objet un ensemble articulé de ce genre dont la sécurité est améliorée; cet ensemble est caractérisé par un dispositif pour bloquer les fusées de l'essieu dans leur position de ligne droite, en cas d'anomalie des moyens de commande.

Des modes particuliers de réalisation de l'invention sont indiqués dans les revendications 2 à 6 dépendantes.

On a décrit ci-après, à titre d'exemple non limitatif, un mode de réalisation d'un ensemble articulé selon l'invention, avec référence aux dessins schématiques annexés dans lesquels :

La Figure 1 est une vue en plan de l'ensemble articulé;
La Figure 2 est une vue en plan de l'essieu orientable;
La Figure 3 est une vue en plan montrant un premier mode de réalisation de la commande du capteur;
La Figure 4 est une vue semblable à la Figure 3 d'un second mode de réalisation;
La Figure 5 montre le circuit de commande.

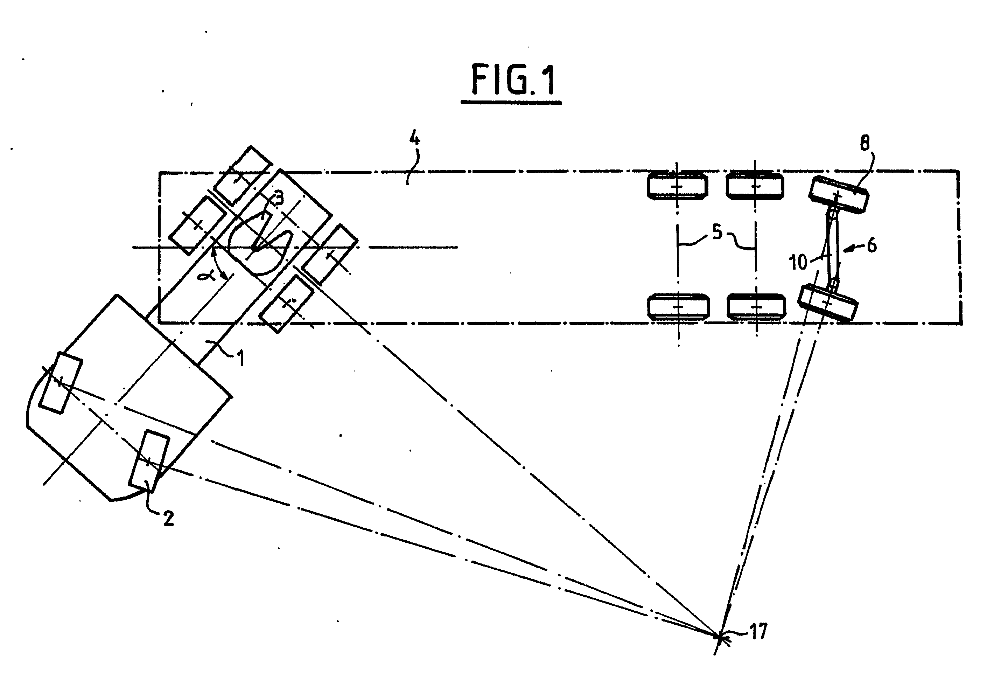

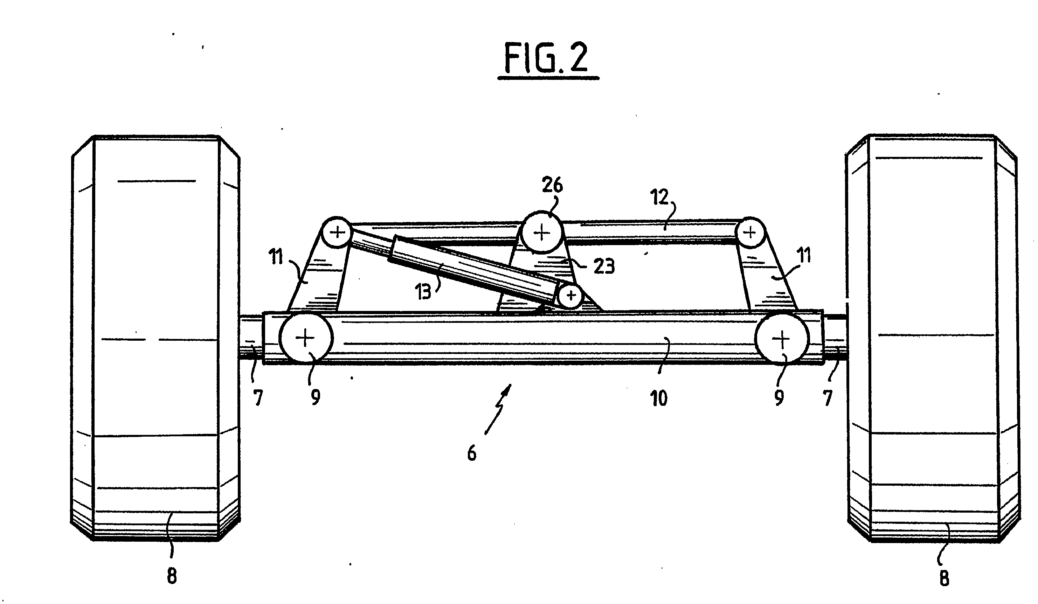

A la Figure 1, on voit un ensemble articulé comprenant un tracteur 1 comportant des roues directrices 2 et une sellette d'attelage 3, et une semi-remorque 4 comportant des essieux fixes 5 et un essieu directeur 6. Les deux fusées 7 de cet ensemble directeur qui portent les roues 8, sont montées pivotantes en 9 sur une traverse 10. Les fusées sont solidaires de deux bras 11 qui sont reliés l'un à l'autre par une tringle 12 et dont l'un est relié à la traverse 10 par un vérin 13 permettant d'orienter les roues 8 (Figure 2).

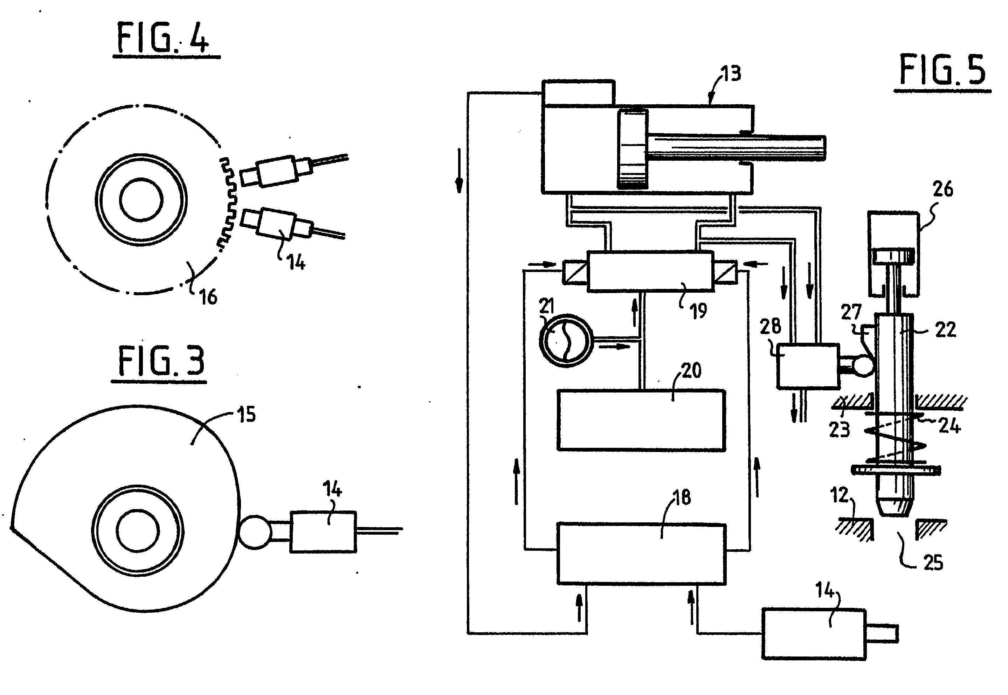

Un capteur 14, porté par le véhicule tracté, permet de déterminer l'angle de désalignement $\alpha$ entre le tracteur 1 et la semi-remorque 4, au niveau du point d'at telage. Ce capteur peut, par exemple, être linéaire et commandé par une came 15 solidaire en rotation de la sellette d'attelage 3 (Figure 3) ou bien inductif et compter les dents d'en secteur denté 16 solidaire de cette sellette (Figure 4).

Le vérin 13 est commandé par le capteur 14 de façon à faire pivoter les fusées 7 en fonction de l'angle de désalignement $\alpha$ de façon que les axes des roues 8 passent par le centre instantané de rotation 17 du tracteur 1. A cet effet, comme on le voit à la Figure 5, il est prévu un boîtier électronique 18 qui reçoit le signal fourni par le capteur 14 et le compare à un signal fourni par les fusées. Le boîtier pilote un distributeur hydraulique 19 interposé entre le vérin 13 et un groupe hydraulique 20 associé à un accumulateur 21.

Un dispositif de sécurité comprenant une broche verticale 22 montée coulissante dans une patte 23 solidaire de la traverse 10 et pouvant s'engager sous l'effet d'un ressort 24 dans un perçage 25 de la tringle 12 permet d'immobiliser les fusées 7 dans leur position de ligne droite (voir Figure 5). Un vérin d'air comprimé 26, dont la partie basse est alimentée par une électro-valve électrique (non représentée sur les figures), permet de retenir la broche 22 dégagée du perçage 25, ce qui permet aux fusées de s'orienter. L'accumulateur 21 comporte un capteur de pression qui commande l'électro-valve (non représentée sur les figures).

La broche 22 porte une came 27 qui actionne un distributeur 28 interposé entre les deux chambres du vérin 13 et la purge. Enfin, il peut être prévu un détecteur de proximité (non représenté sur les figures) qui, lorsque la broche 22 est en position de verrouillage, assure l'arrêt de l'électro-pompe qui assure normalement l'alimentation du circuit hydraulique.

En cas de défaillance du circuit de commande de l'essieu 6, le dispositif 26 ne maintient plus la broche 22. Le tracteur 1 et la semi-remorque étant alignés en ligne droite, la broche 22 se déplace sous l'effet du ressort 24. La came 27 actionne le distributeur 28 qui met à la purge les deux chambres du vérin 13. Ce vérin est ainsi rendu inactif quelles que soient les informations fournies par le capteur 14 et, par suite, la position du distributeur 19. En fin de mouvement, la broche 22 s'engage dans le perçage 25, ce qui bloque les fusées en position.

La défaillance du circuit de commande peut être électrique, hydraulique ou électronique. En cas de panne de l'alimentation électrique, l'électro-valve qui assure l'alimentation du verin 26 est mise à l'air libre et la broche 22 est entraînée par le ressort 24 dans son logement 25. En cas d'une baisse de pression dans le circuit hydraulique, le capteur (non représenté sur les figures) de l'accumulateur 21 déclenche la mise à l'air libre du vérin 26 par l'intermédiaire de l'électro-valve.

En cas de rupture d'une canalisation hydraulique alimentant le vérin 13, la baisse de pression n'est pas détectée par le capteur de l'accumulateur 21 mais les déplacements du vérin 13 ne sont plus en concordance avec l'indication donnée par le capteur 14 et le module électronique 18 signale l'anomalie à l'électro-valve du vérin qui assure la mise à l'air de ce vérin.

Toute défaillance de la logique électronique conduit à l'ouverture de l'électro-valve qui assure la mise à l'air du verin 26 et déclenche le verrouillage.

La mise en position verrouillage de la broche 22 conduit, à l'aide du détecteur de proximité, à l'arrêt de l'électro-pompe qui assure normalement l'alimentation du circuit hydraulique.

## Revendications

1. Ensemble articulé comportant un véhicule tracteur (1) et un véhicule tracté (4) qui comporte au moins un essieu directeur orientable (6), des moyens (13) pour assurer l'orientation des fusées (7) de l'essieu, un capteur (14) pour détecter le désalignement (α) des véhicules tracteur (1) et tracté (4) au niveau du point d'attelage, et des moyens (18-19) pour commander les moyens d'orientation (13) en fonction des indications fournies par le capteur (14), caractérisé par un dispositif (22) pour bloquer les fusées (7) de l'essieu dans leur position de ligne droite, en cas d'anomalie des moyens de commande.

2. Ensemble selon la revendication 1, caractérisé en ce que le dispositif (22) assurant le blocage de l'essieu rend en même temps inactifs les moyens d'orientation (13).

3. Ensemble selon la revendication 1, caractérisé en ce que des moyens de blocage comprennent une broche (22) montée coulissante par rapport à l'essieu (6) et pouvant s'engager sous l'effet de moyens élastiques (24) dans un perçage (25) de la tringle (12) reliant les deux fusées (11) de l'essieu, et des moyens (26) pour maintenir la broche (22) dégagée du perçage (25) en l'absence d'anomalie des moyens de commande.

4. Ensemble selon les revendications 2 et 3, caractérisé en ce que les moyens d'orientation (13) sont constitués par un vérin qui assure l'orientation des deux roues (8) de l'essieu directeur (6) du véhicule tracté (4) et dont la course est fonction du dé-salignement (α) détecté par le capteur (14) et en ce que la broche (22) porte une came (27) actionnant un distributeur (28) interposé entre les deux chambres du vérin (26) et la purge.

5. Ensemble selon la revendication 3 ou 4, caractérisé en ce que les moyens pour maintenir la broche (22) dégagée du perçage (25) en l'absence d'anomalies des moyens de commande sont constitués par un vérin à air comprimé (26) dont la partie active dans le sens opposé à l'action des moyens élastiques (24) est alimentée par une électro-valve pneumatique.

6. Ensemble selon la revendication 5, caractérisé par un accumulateur (21) qui comporte un capteur de pression constituant l'électro-valve.

## Patentansprüche

1. Gliederzug mit einem Zugfahrzeug (1) und einem Schleppfahrzeug (4), welches wenigstens eine einstellbare Lenkachse (6), Mittel (13) zum Festlegen der Ausrichtung der Achsschenkel (7) der Achse, einen Aufnehmer (14) zum Feststellen der Auslen-kung (α) zwischen dem Zugfahrzeug (1) und dem Schleppfahrzeug (4) in der Höhe des Kupplungspunktes und Mittel (18, 19) zum Steuern der Mittel (13) zum Einstellen der Ausrichtung aufgrund der vom Aufnehmer (14) gelieferten Werte umfasst, gekennzeichnet durch eine Vorrichtung (22) zum Blockieren der Achsschenkel (7) der Achse in einer Position entsprechend der geraden Richtung im Falle einer Unregelmässigkeit der Mittel zum Steuern.

2. Zug nach Anspruch 1, dadurch gekennzeichnet, daß die Vorrichtung (22) zum Sicherstellen der Blockierung der Achse gleichzeitig die Inaktivierung der Mittel (13) für die Ausrichtung bewirkt.

3 Zug nach Anspruch 1, dadurch gekennzeichnet, daß die Mittel zum Blockieren einen Bolzen (22) aufweisen, der verschiebbar bezüglich der Achse (6) befestigt ist und unter dem Druck federnder Elemente (24) in die Bohrung (25) der Stange (12) paßt, die die beiden Achsschenkel (7) der Achse verbindet, und Mittel (26) zum Festhalten des Bolzens (22) außerhalb der Bohrung (25), falls keine Unregelmä-ßigkeit der Mittel zur Steuerung vorliegt.

4. Zug nach einem der Ansprüche 2 oder 3, dadurch gekennzeichnet, daß die Mittel (13) zum Lenken mit einem Stellzylinder aufgebaut sind, der die Ausrichtung der Räder (8) der Lenkachse des Schleppfahrzeuges (4) festlegt und deren Richtung eine Funktion der Auslenkung (α) ist, der durch den Aufnehmer (14) festgestellt wird und daß der mit einer Nocke (27) ausgestattete Bolzen (22) einen Verteiler (28) betätigt, welcher zwischen den beiden Kammern des Stellzylinders (26) und dem drucklosen Abfluss angeordnet ist.

5. Zug nach einem der Ansprüche 3 oder 4, dadurch gekennzeichnet, daß die Mittel zum Festhalten des Bolzens (22) außerhalb der Bohrung (25) bei fehlender Unregelmäßigkeit der Mittel zum Steuern aus einem Druckluftventil (26) bestehen, dessen beweglicher Teil entgegen der Wirkrichtung der elastischen Mittel (24) mittels eines Elektroventiles mit Druckluft beaufschlagt wird.

6. Zug nach Anspruch 5, gekennzeichnet durch einen Speicher (21), der den Druck zur Versorgung des elektrischen Ventiles aufbringt.

## Claims

1. An articulated assembly comprising a towing vehicle (1) and a tractor-drawn vehicle (4) which includes at least a steerable axle (6), means (13) for orienting stubs (7) of said axle, a sensor (14) for de-tecting any misalignment (α) of the towing vehicle (1) and tractordrawn vehicle (4) past the coupling point, and means (18–19) for controlling said orienting means (13) in relation to the information provided by said sensor (14), characterized by a device (22) for blocking said axle stubs (7) in the straight line thereof, should it occur any unwanted condition of said control means.

2. The assembly of claim 1, characterized in that stub blocking device (22) makes inoperant said orienting means (13) at the same time.

3. The assembly of claim 1, characterized in that blocking means include a spindle (22) slidably mounted in relation to said axle (6) and being able to be engaged by means of resilient means (24) into a bore (25) in a rod (12) connecting both axle stubs (7), and means (26) for maintaining said spindle (22) out of engagement from bore (25) if there is no unwanded condition of said control means.

4. The assembly of claims 2 and 3, characterized in that said orienting means (13) include an actuator which causes both wheels (8) of tractor-drawn vehicle (4) steering axle (6) to be oriented and the stroke of which depends on the misalignement ($\alpha$) amount detected by said sensor (14), and in that said spindle (22) carries a cam (27) driving a manifold (28) which is interposed between both actuator (26) chambers and the sump.

5. The assembly of claim 3 or 4, characterized in that said means for maintaining said spindle (22) out of engagement from bore (25) if there is no unwanted condition of said control means comprise a compressed air actuator (26), the portion thereof acting in a direction opposite to that of resilient means (24) being supplied by a pneumatic electro-valve.

6. The assembly of claim 5, characterized by an accumulator (21) which includes a pressure sensor constituting said electro-valve.

FIG.1

# FIG.2

EP 0 299 851 B1

FIG. 5

FIG. 4

FIG. 3